# EUROPEAN PATENT SPECIFICATION

(11) **EP 1 459 471 B1**
(45) Date of publication and mention of the grant of the patent: **03.05.2006**
(21) Application number: 02783446.4
(22) Date of filing: 26.11.2002
(51) Int. Cl.: H04L 1/18, H04L 12/28, H04L 12/56

(54) **TIME DIVERSITY COMBINING TO INCREASE THE RELIABILITY OF THE IEEE 802.11 WLAN RECEIVER**
ZEITDIVERSITÄTS-KOMBINIERUNG UM DIE ZUVERLÄSSIGKEIT VON IEEE 802.11 WLAN EMPFÄNGERN ZU ERHÖHEN
PROCEDE DE COMBINAISON EN DIVERSITE TEMPORELLE PERMETTANT D'AUGMENTER LA FIABILITE DU RECEPTEUR DE RESEAU LOCAL SANS FIL IEEE802.11

(30) Priority: 17.12.2001 US 23094
(43) Date of publication of application: 22.09.2004
(73) Proprietor: Koninklijke Philips Electronics N.V., 5621 BA Eindhoven (NL)
(72) Inventor: OUYANG, Xuemei, NL-5656 AA Eindhoven (NL); MEEHAN, Joseph, NL-5656 AA Eindhoven (NL); CHOI, Sunghyun, NL-5656 AA Eindhoven (NL)
(74) Representative: Volmer, Georg
(86) International application number: PCT/IB2002/004982
(87) International publication number: WO 2003/052998

(56) References cited:
- EP-A- 0 948 154
- EP-A- 1 018 816
- DE-A- 10 034 977
- "IEEE standard Part 11: wireless LAN medium access control (MAC) and physical layer (PHY) specification. (ISO/IEC 8802-11, ANSI/IEEE Std 802.11-1999) Chapter 14: Frequency-Hopping spread spectrum (FHSS) PHY specification for the 2.4 GHz" , ISO/IEC 8802-11 ANSI/IEEE STD 802.11, XX, XX, PAGE(S) 148-194 XP002207976 the whole document
- "IEEE standard for information technology - telecommunications and information exchange between systems - local and metropolitan area networks - specific requirement. Part 11: wireless LAN medium access control (MAC) and physical layer (PHY) specification. (ISO/IEC 8802-11, ANSI/IEEE Std 802.11-1999)" , ISO/IEC 8802-11 ANSI/IEEE STD 802.11, XX, XX, PAGE(S) 1,34--58 XP002206839 the whole document

## Description

### BACKGROUND OF THE INVENTION

### Field of the Invention

The present invention relates to data communication. More particularly, the present invention relates to a method and apparatus for providing efficient recovery of data by combining the original packet with its retransmitted version.

### Description of the Invention

The BEER 802-11 standard specifies the medium access control (MAC) and physical characteristics for a wireless local area network (WLAN) to support physical layer units. The IEEE 802.11 standard is defined in International Standard ISO/IEC 8802-11, "Information Technology-Telecommunications and information exchange area networks," 1999 Edition.

In an 802-11 WLAN system, the mechanism of transmission and reception is based on packet transmission and acknowledgement protocol. If no acknowledgement is received during a preset time period, the same packet will be retransmitted at the expense of occupying more bandwidth. This retransmission of lost packets will continue until (1) a reliable packet is received at the receiver; (2) the maximum number of retransmissions is reached; or (3) the packet lifetime is passed. Under the current 802.11 scheme, if the next received packet in response to the previous erroneous or lost packet also contains an error, the receiver discards the retransmitted packet and waits for another reliable retransmission of the previous packet Thus, the retransmission of lost packets can occur many times. For data communication, the current 802.11 protocol is acceptable as that the reliability of the received data packet is much more important than how fast the retransmission of lost packets is received.

In chapter 7 of the IEEE 802.11 standard the format of the MAC frames is specified and in chapter 14 the Physical Layer (PHY) services provided to IEEE 802.11 wireless LAN MAC for Frequency-Hopping spread spectrum (FHSS) system are described.

EP 1018 816 discloses a method of recovering a received packet comprising the steps of: generating a soft value for each bit of the received packet and storing the soft value of the received packet. The method further comprises the step of performing an error check on the received packet and responsive to detection of an error by receiving a retransmission of the packet, generating a soft value for each bit of the retransmitted packet, combining each generated soft value with the respective last stored soft value, storing the combined soft values and performing an error check based on thus combined soft values.

However, unlike the data service, both the time periods for receiving a data packet and the reliability of the data packet are essential in the application requiring a streaming of audio and video data. Therefore, there exits a need to obtain a reliable packet recovery within a limited time period to enable the streaming audio and video in the WLAN system.

### SUMMARY OF THE INVENTION

The present invention overcomes the above-described problems, and provides additional advantages, by providing a method and apparatus for combining retransmitted signals with previously stored signals with error.

According to an aspect of the invention, the method of combining a data packet in a communication system includes the steps of: receiving a transmission of the data packet to obtain a received packet; demodulating the received packet to be stored in a first storage medium; determining whether the received packet is a retransmitted packet according to predetermined criteria; and, if so, combining the received packet with a previous packet stored in a second storage medium using a maximum ratio combining method. The step of combining the received packet with the previous packet is performed according to the signal-to-noise ratio (SNR) calculated according to the bits in the preamble of the received packet and a previous packet with the same packet number, and the predetermined criteria are based on a medium access control (MAC) frame of the received packet and a previous packet of the same number. As such, the step of determining whether the received packet is a retransmitted packet further includes the steps of: determining whether the length field of the received packet and the stored packet in error are the same; determining whether the retry bit field of the received packet is activated when the length field of the received packet and the stored packet in error are the same; determining whether the address field of the received packet and the stored packet are the same when the retry bit field of the received packet is activated; and, determining whether the sequence control field of the received packet and the stored packet are the same when the address field of the received packet and the stored packet are the same.

According to another aspect of the invention, the method of combining a data packet in a communication system includes the steps of: receiving and storing a transmission of the data packet in a first storage medium to obtain a received packet; extracting a physical layer convergence protocol (PLCP) and MAC header from the received packet stored in the first storage medium; comparing the PLCP and MAC header of the data packet stored in the first storage medium and a previously received packet with error stored in a second storage medium to determine whether the received packet is a retransmitted packet; and, if so, combining the received packet with the previous packet stored in a second storage medium using a maximum ratio combining method. The step of combining the received packet with a previous packet is performed according to the signal-to-noise ratio (SNR) of the received packet and the stored packet. Also, the step of determining whether the received packet is a retransmitted packet further includes the steps of: determining whether the length field of the received packet and the stored packet are the same; determining whether the retry bit field of the received packet is activated when the length field of the received packet and the stored packet are the same; determining whether the address field of the received packet and the stored packet are the same when the retry bit field of the received packet is activated; and, determining whether the sequence control field of the received packet and the stored packet are the same when the address field of the received packet and the stored packet are the same.

According to a further aspect of the invention, the apparatus for combining a data packet in a communication system includes: a demodulation means for demodulating a transmission of the data to obtain a received packet; a first storage means for storing the received packet; a second storage means for storing a previous packet with error; and, a processor for determining whether the received packet is a retransmitted packet in response to the previous packet according to predetermined criteria; a combining means for combining the received packet with the previous packet when the predetermined criteria is satisfied; and at least one antenna for receiving the transmission of the data and the previous packet. The combining means uses a maximum ratio combining method and is performed according to the signal-to-noise ratio (SNR) of the received packet and a previous packet with same packet number. The predetermined criteria are based on a medium access control (MAC) frame of the received packet and the previous packet. The processor further operates to determine that the received packet is a retransmitted packet when the length field of the MAC frame for the received packet and the stored packet are the same; determine that the received packet is the retransmitted packet when the retry bit field of the MAC frame for the received packet is activated; determine that the received packet is the retransmitted packet if the address field of the MAC frame for the received packet and the stored packet are the same; and, determine that the received packet is the retransmitted packet if the sequence control field of the MAC frame for the received packet and the stored packet are the same.

The foregoing and other features and advantages of the invention will be apparent from the following, more detailed description of preferred embodiments as illustrated in the accompanying drawings in which reference characters refer to the same parts throughout the various views. The drawings are not necessarily to scale, the emphasis is placed instead upon illustrating the principles of the invention.

### BRIEF DESCRIPTION OF THE DRAWINGS

The above and other features and advantages of the present invention will become more apparent from the following detailed description when taken in conjunction with the accompanying drawings, in which:
FIG. 1 illustrates a simplified block diagram of the communication system whereto the embodiment of the present invention may be applied;
FIG.2 is a simplified circuit block diagram of a wireless receiver according to an embodiment of the present invention;
FIG. 3 illustrates a MAC header frame fonnat as set forth under the 802.11 standard which supports retransmission scheme according to an embodiment of the present invention;
FIG. 4 illustrates one of the fields provided in the MAC header frame shown in FIG. 3;
FIG.5 illustrates one of the fields provided in the MAC header frame shown in FIG. 3;
FIG. 6 is a block diagram of an exemplary demodulator within the wireless receiver according to an embodiment of the present invention; and,
FIG. 7 is a flow chart illustrating the operation process according to an embodiment of the present invention.

### DETAILED DESCRIPTION OF THE PREFERRED EMBODIMENT

In the following description, for purposes of explanation rather than limitation, specific details are set forth such as the particular architecture, interfaces, techniques, etc., in order to provide a thorough understanding of the present invention. However, it will be apparent to those skilled in the art that the present invention may be practiced in other embodiments, which depart from these specific details. Moreover, for the purpose of clarity, detailed descriptions of well-known devices, circuits, and methods are omitted so as not to obscure the description of the present invention with unnecessary detail.

Although the present invention is particularly well suited for use in a wireless local area network (WLAN) and will be described hereinafter with respect to this application, it should be noted that the method and apparatus disclosed herein can be applied to other digital wireless communication systems, such as the North American Mobile Radio Standard and the Group Special Mobile (GSM) based systems (also known as Global system for Mobile communication, which is a digital cellular phone service used in Europe and Japan), and the Digital European Cordless Telecommunications (DECT) based system, which is a pan-European digital cordless telephony interface specification.

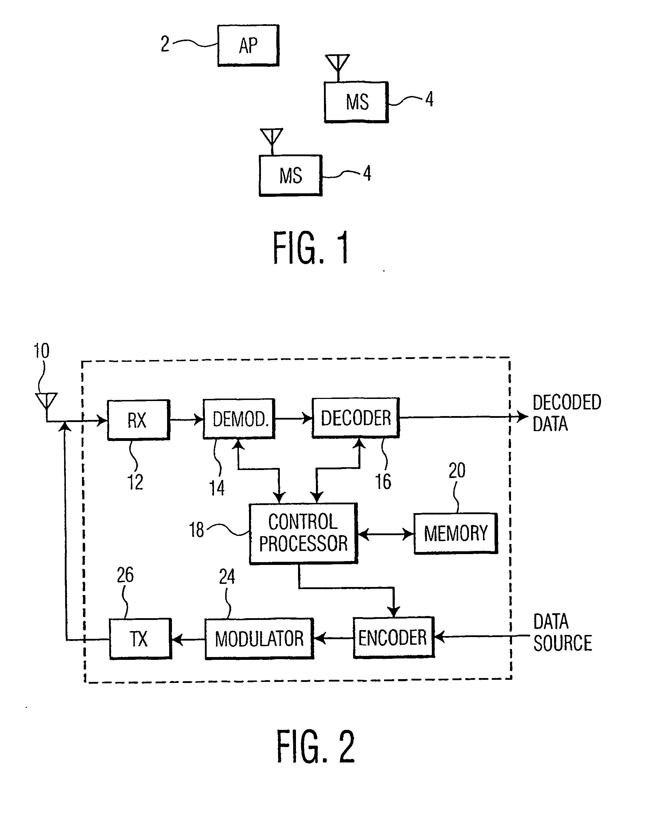

FIG. 1 illustrates a representative network whereto the embodiments of the present invention may be applied. As shown in FIG. 1, an access point (AP) 2 is coupled to a plurality of mobile stations 4 (STAᵢ), which through a wireless link is communicating with each other and to the AP 2 via a plurality of wireless channels. The main functions of the AP are to support roaming (i.e., changing access points), synchronize within a BSS, support power management, and control the medium access to a support time-bounded service within a BSS.

FIG. 2 illustrates an exemplary block diagram of the AP 2 and mobile station 4 of the present invention and includes: an antenna 10, a receiver 12, a demodulator 14, a decoder 16, a control processor 18, a memory 20, an encoder 22, a modulator 24, and a transmitter 26. Data reception on the reverse link is initiated upon receiving incoming data packets received from the antenna 10. The received signals are routed through the receiver 12 and to the demodulator 14 where the signals are demodulated and forwarded to the decoder 16 for decoding. Meanwhile, the control processor 18 operates to control the demodulation process, and if the packet is received in error, the control processor 18 requests the source device for retransmission. Thereafter, the retransmitted packet is detected according to predetermined criteria and recombined with the original packet with the error, such that a reliable data packet can be obtained in a short period while improving the signal-to-noise ratio (SNR) of the packet due to the diversity gain (explained later). In an alternative embodiment, the source device may retransmit a packet if an ACK message for that packet is not received within a predetermined time period from the receiving device. Data transmission on the forward link originates from a data source in data packets to the encoder 22, which in turn forwards the encoded data to the modulator 24. Then, the modulated signals are routed through the transmitter 26 and transmitted through the antenna 10 on the forward link.

A key principle of the present invention is to take advantage of the temporal diversity with the retransmitted packet by combining the original packet with its retransmitted version as both packets would have the same contents but are transmitted at different times.

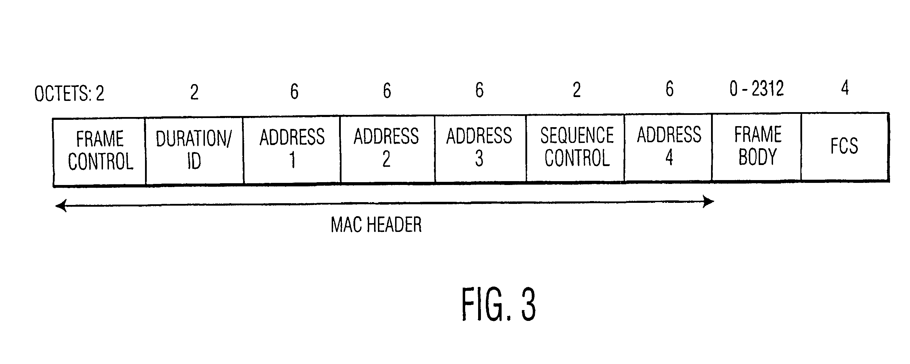

Now, the provision of diversity combining to support the reception of a reliable data packet according to the present invention will be explained in a detailed description with reference to FIGs. 3 through 5.

In order for the temporal diversity combining to work properly according to the embodiment of the present invention, a station needs to identify if a packet being received is a retransmission of a packet that was received in error previously. Because of the complexity of the identification of the frame, several criteria provided in a MAC frame are used to identify whether a current packet is a retransmitted packet according to the embodiment of the present invention. In particular, the present invention utilizes the control signal from the MAC layer of WLAN and implements the operation steps as described hereinafter in the physical layer (PHY).

FIG. 3 illustrates the general MAC frame format as set forth under the 802.11 standard and which includes a set of fields that occur in a fixed order. Using this MAC frame, the present invention enables a particular station to identify whether a packet being received is a retransmission of a packet that can be used to combine with the packet that was received in error previously.

First, the "LENGTH field" (Duration/ID field) in the PLCP header may be used as one of the criteria in identifying a retransmitted packet in accordance with the present invention. The "LENGTH field" is used to indicate the length of the current packet. Typically, different packets will have different values in "LENGTH fields." The possibility of two different packets having the same packet length is very low. Thus, the "LENGTH field" can be used as the initial criteria to distinguish a packet from others. The "LENGTH field" is always transmitted at the basic rate, which is the lowest rate of the transmission packet. As such, the possibility of error for this field is very small compared with the data in a MAC layer that could be transmitted at a higher data rate. Moreover, if two packets are different but the MAC layer criteria detection according to the present invention indicates that they are the same packets transmitted at different times, the system already has a safeguard function when such an error occurs as the combined packet will never pass the CRC detection at the MAC layer. Therefore, this field can be taken as a reliable field to identify the retransmitted packet.

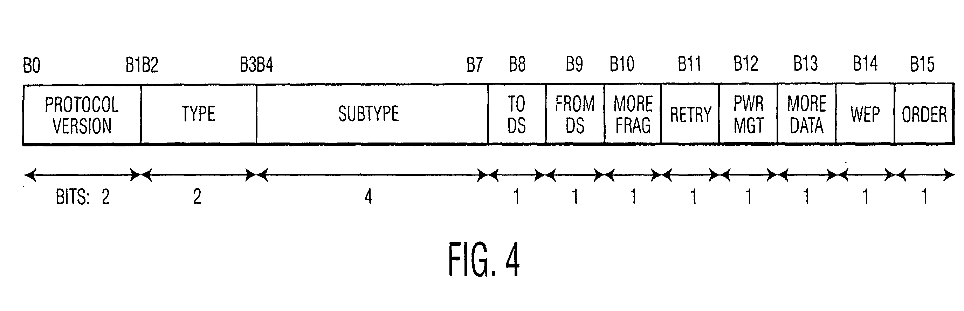

Secondly, the "Frame Control field" of the MAC header may be used as additional criteria to identify the retransmitted packet in accordance with the present invention. FIG. 4 illustrates the format of the "Frame Control field." As the MAC header is a small part in the whole data frame and most of the errors exist in the frame body (MSDU data), it is safe to assume that two identical frames would have the same information in the MAC header, except for the "RETRY subfield (B11)" in the "Frame Control Field." Hence, if the MAC header with the "LENGTH field" also contains the "Frame Control Field" with the "RETRY" bit set to 1, it is more certain that the current packet is the retransmitted packet.

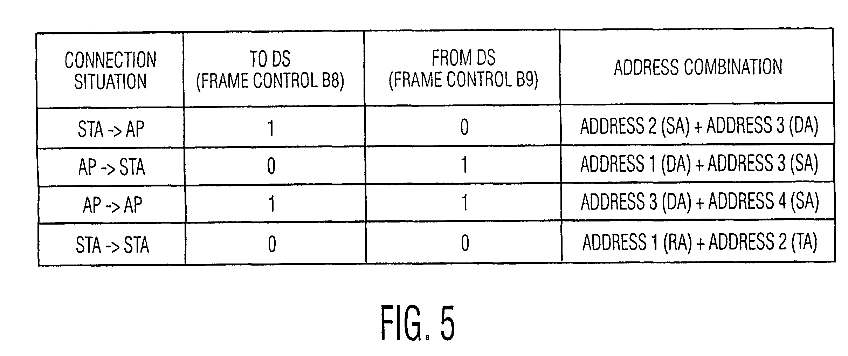

In addition, the four address fields in the data frame, namely the transmitter address, receiver address, source address, and destination address, may be used to identify the retransmitted frame in accordance with the present invention. The address information indicating whether the two frames have the same transmission pair information assist in deciding whether the current packet is the retransmitted packet. That is, all the addresses are the same for two frames after meeting the first and second criteria as described above. Thus, it can be assumed that the current received frame is a retransmitted version. In order to decrease the bit number used for the detection purpose, the combination of the address fields controlled by two control bits in the "FRAME CONTROL field" can be used, as shown in FIG. 5. However, if RTS/CTS is used in the MAC frame during the frame handshaking process, this information may be used instead to identify the transmission pair between a transmitting end and a receiving end. Then, the detection of the address field could be omitted. If the optional polling mechanism, i.e., PCF (Point coordination function) or the upcoming HCF (Hybrid Control Function) as part of the new 802.11e MAC standard is used in the MAC frame, the detection of address field also could be omitted, as the STA, which receives the polling frame, is in fact the transmitting STA.

Furthermore, the "Sequence Control field "of the MAC header, as shown in FIG. 3, may be used to identify whether the current packet is a retransmitted packet in accordance with the present invention. If the sequence control field is the same for both packets, then it can be safely assumed that the current frame is the retransmission packet in response to the lost packet.

If all of the above criteria are satisfied, the present system determines that the current frame as the retransmitted frame of the frame that was received previously in error. Then, the retransmitted frame is combined with the previous frame by the maximum ratio combining method, and the resultant combined data is outputted to the decoder 16. Thereafter, the decoder 16 decodes the combined data based on a predetermined decoding method, and outputs the resultant decoded data at a later stage. It will be appreciated by those skilled in this art that the 3dB gain in SNR at the output of the combination will be obtained for two packets combining (6dB for four packets combining) when the two packets that are combined are the same through the maximum ratio combining method. As a result, the increase of SNR at the PHY layer will then improve the reliable reception of the data packet in the MAC layer with fewer retransmission times.

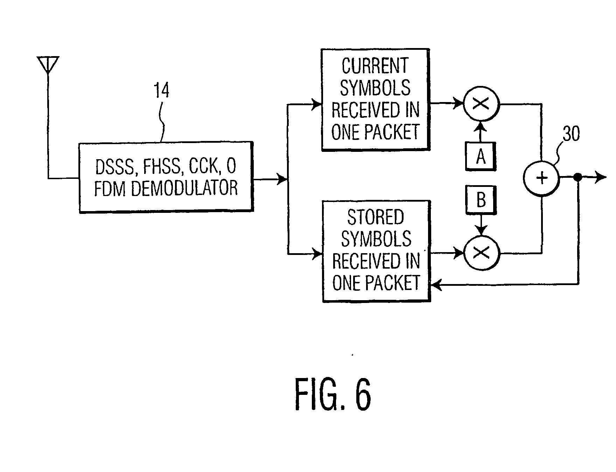

FIG. 6 illustrates the detection process as described above in terms of a block diagram. As shown in FIG. 6, the incoming signals are demodulated by the demodulator 14. The current packet is stored in Buffer A and the previously received packet with error is stored in Buffer B. If the current packet received in Buffer A is determined to be the retransmission of the packet stored in Buffer B, a maximum ratio combining, in which the combining coefficients for A and B can be calculated according to the symbol SNR of the stored packet and the current received packet, is performed at the adder 30. The packet stored in Buffer B can be a single packet or a combined packet that still can not pass the MAC CRC check (as shown in the feedback part of FIG. 6). In the second case, the combining can happen for several retransmitted packets to get higher SNR (e.g., 6 dB for 4 packets combining.) As a result, the number of buffers can be saved, and the increase of SNR at the PHY layer will then improve the reliable reception of the data packet in the MAC layer with less retransmission time.

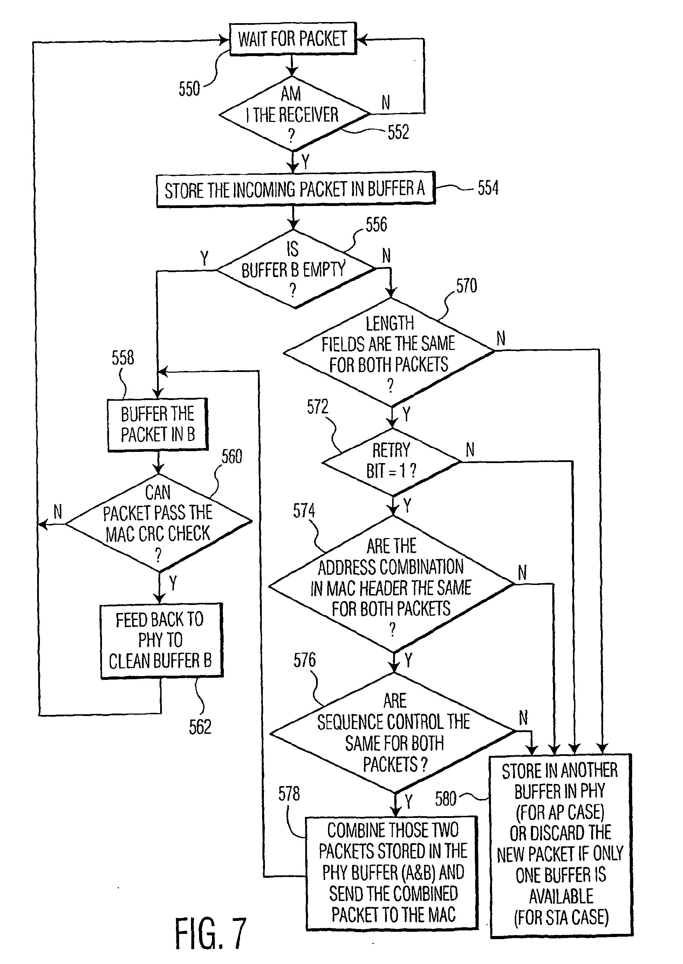

FIG. 7 illustrates the above process shown in FIG. 6 in detail in regards to this invention. It should be noted that the time diversity combining method according to the present invention can be implemented in the station or the access point (AP). For simplicity, the present invention will be described hereinafter with respect to the station. As shown in FIG. 7, the station waits for a packet in step S50. If the packet is intended to the station in step S52, the station stores the incoming packet in Buffer A in S54. Otherwise, the station waits for the next frame. In step S56, it is determined whether Buffer B is empty. If Buffer B is empty, the incoming packet is stored in Buffer B in S58. Then, the buffered packet is tested for the MAC CRC check in S60. If the buffered packet passes the CRC check, then the buffered packet is deleted from Buffer B in S62. If it fails, the buffered packet remains in Buffer B and S50 is repeated.

If Buffer B is not empty in S56, the "LENGTH field" of the incoming packet stored in Buffer A is compared with the packet stored in Buffer B in S70. If the "LENGTH field" is the same in both packets, it is determined whether the packet stored in Buffer A contains "RETRY bit," which is set equal to 1 in S72. If so, it is checked whether the address combination in the header is the same for both packets in S74. If so, it is checked whether the "Sequence Control field" is the same for both packets in S76. If S70 through S76 is yes, a conclusion that these two packets are the same is drawn. As such, these two packets are combined using the maximum ratio combining method in S78, then the combined packet is stored in Buffer B. However, if S70 through S76 is no, the incoming packet is stored in another buffer (for AP case) or discarded if only one buffer is available in the station in S80.

Having thus described a preferred embodiment of a method and system for combining packets, it should be apparent to those skilled in the art that certain advantages of the system have been achieved. As the wireless channel is unlikely to be exactly the same at different times, the distortion of the channel for each data packet will be different. Hence, the present invention provides a reliable data packet transmission in a shorter time period through a diversity combining method and enhances the performance for a streaming audio and video service by reducing the throughput time for poor channel conditions. In addition, with the diversity combining, the signal-to-noise ratio (SNR) of the symbol will be improved because of the diversity gain.

While the preferred embodiments of the present invention have been illustrated and described, it will be understood by those skilled in the art that various changes and modifications can be made, and equivalents may be substituted for elements thereof without departing from the true scope of the present invention. In addition, many modifications can be made to adapt to a particular situation and the teaching of the present invention without departing from the central scope. Therefore, it is intended that the present invention not be limited to the particular embodiment disclosed as the best mode contemplated for carrying out the present invention, but that the present invention include all embodiments falling within the scope of the appended claims.

## Claims

1. A method for combining a data packet in a communication system, the method comprising the steps of:
receiving (550) a transmission of said data packet to obtain a received packet;
demodulating (552) said received packet to be stored in a first storage medium;
determining whether said received packet is a retransmitted packet according to predetermined criteria (570, 572, 574, 576),
**characterized in that** if said received packet is a retransmitted packet according to predetermined criteria, the method comprises the step of combining said received packet with a previous packet stored in a second storage medium using a maximum ratio combining method (578) and is performed according to the symbol signal-to-noise ratio of said received packet and said stored packet.

2. The method of claim 1, wherein the step of determining whether said received packet is a retransmitted packet further comprises the steps of:
determining whether the length field (570) of said received packet and said stored packet are the same ;
determining whether the retry bit field (572) of said received packet is activated when the length field of said received packet and said stored packet are the same; and,
determining whether the sequence control field (576) of said received packet and said stored packet are the same when the retry bit field of said received packet is activated.

3. The method of claim 1, wherein the step of determining whether said received packet is a retransmitted packet further comprises the step of determining whether the address field (574) of said received packet and said stored packet are the same.

4. The method of claim 1, wherein said predetermined criteria are based on a medium access control (MAC) frame of said received packet and said stored packet.

5. The method of claim 1, wherein the step of combining said received packet with said stored packet is performed in an access point (AP) (2).

6. The method of claim 6, wherein the step of combining said received packet with said stored packet is performed in a mobile station (4) in communication with said AP (2).

7. The method of claim 1, wherein the step of determining whether said received packet is a retransmitted packet further comprises the steps of:
determining whether the length field (570) of said received packet and said previous packet are the same;
determining whether the retry bit field (572) of said received packet is activated when the length field of said received packet and said previous packet are the same;
determining whether the address field (574) of said received packet and said previous packet are the same when the retry bit field of said received packet is activated; and,
determining whether the sequence control field (576) of said received packet and said previous packet are the same when the address field of said received packet and said previous packet are the same.

8. The method of claim 1, wherein the step of determining whether said received packet is a retransmitted packet further comprises the steps of:
extracting a physical layer convergence protocol (PLCP) and MAC header from said received packet stored in said first storage medium; and,
comparing the PLCP and MAC header of said data packet stored in said first storage medium and a previously received packet with error stored in a second storage medium.

9. An apparatus (2, 4) for combining a data packet in a communication system, comprising:
a demodulation means (14) for demodulating a transmission of said data to obtain a received packet;
a first storage means for storing said received packet;
a second storage means for storing a previous packet with error; and,
a processor (18) for determining whether said received packet is a retransmitted packet in response to said previous packet according to predetermined criteria; and,
a combining means (30) for combining said received packet with said previous packet when said predetermined criteria is satisfied,
**characterized in that** a maximum ratio combining method (578) according to the symbol signal-to-noise ratio of said received packet and said stored packet is used.

## Patentansprüche

1. Verfahren zum Kombinieren eine Datenpakets in einem Kommunikationssystem, wobei das Verfahren die nachfolgenden Verfahrensschritte umfasst:
- das Empfangen (550) einer Übertragung der genannten Datenpakete zum Erhalten eines empfangenen Pakets;
- das Demodulieren (552) des genannten empfangenen Pakets, das in einem ersten Speichermedium gespeichert werden soll;
- das Ermitteln, ob das genannte empfangene Paket ein neu übertragenes Paket entsprechend vorbestimmten Kriterien (570, 572, 574, 576) ist,
**dadurch gekennzeichnet, dass** wenn das empfangene Paket ein neu übertragenes Paket entsprechend vorbestimmten Kriterien ist, das Verfahren den Schritt aufweist, dass das genannte empfangene Paket mit einem vorhergehenden Paket in einem zweiten Speichermedium kombiniert, wobei ein Maximal-Verhältnis-Kombinationsverfahren (578) angewandt wird, und entsprechend dem Symbol Signal-Rausch-Verhältnis des genannten empfangenen Pakets und des genannten gespeicherten Pakets durchgeführt wird.

2. Verfahren nach Anspruch 1, wobei der Schritt der Ermittlung, ob das genannte empfangene Paket ein neu übertragenes Paket ist, weiterhin die nachfolgenden Verfahrensschritte umfasst:
- das Ermitteln, ob das Längenfeld (570) des genannten empfangenen Pakets und des genanten gespeicherten Pakets einander gleich sind;
- das Ermitteln, ob das Wiederholungsbitfeld (572) des genannten empfangenen Pakets aktiviert wird, wenn das Längenfeld des genannten empfangenen Pakets und des genannten gespeicherten Pakets einander gleich sind; und
- das Ermitteln, ob das Sequenzsteuerfeld (576) des genannten empfangenen Pakets und des genannten gespeicherten Pakets einander gleich sind, wenn das Wiederholungsbitfeld des genannten empfangenen Pakets aktiviert wird.

3. Verfahren nach Anspruch 1, wobei der Verfahrensschritt der Ermittlung, ob das genannte empfangene Paket ein neu übertragenes Paket ist, weiterhin den Schritt der Ermittlung umfasst, ob das Adressfeld (574) des genannten empfangenen Pakets und des genannten gespeicherten Pakets einander gleich sind.

4. Verfahren nach Anspruch 1, wobei die genannten vorbestimmten Kriterien auf einem Mediumzugriffssteuerungsframe (MAC) des genannten empfangenen Pakets und des genannten gespeicherten Pakets basiert sind.

5. Verfahren nach Anspruch 1, wobei der Schritt der Kombination des genannten empfangenen Pakets mit dem genannten gespeicherten Paket an einem Zugriffspunkt (AP) (2) durchgeführt wird.

6. Verfahren nach Anspruch 6, wobei der Schritt der Kombination des genannten empfangenen Pakets mit dem genannten gespeicherten Paket in einer mobilen Station (4) in Kommunikation mit dem genannten AP (2) durchgeführt wird.

7. Verfahren nach Anspruch 1, wobei der Schritt der Ermittlung, ob das genannte empfangene Paket ein neu übertragenes Paket ist, weiterhin die nachfolgenden Schritte umfasst:
- das Ermitteln, ob das Längenfeld (570) des genannten empfangenen Pakets und des genannten vorhergehenden Pakets einander gleich sind;
- das Ermitteln, ob das Wiederholungsbitfeld (572) des genannten empfangenen Pakets aktiviert wird, wenn das Längenfeld des genannten empfangenen Pakets und des genannten vorhergehenden Pakets einander gleich sind;
- das Ermitteln, ob das Adressfeld (574) des genannten empfangenen Pakets und des genannten vorhergehenden Pakets einander gleich sind, wenn das Wiederholungsbitfeld des genannten empfangenen Pakets aktiviert wird; und
- das Ermitteln, ob das Sequenzsteuerfeld (576) des genannten empfangenen Pakets und des genannten vorhergehenden Pakets einander gleich sind, wenn das Adressfeld des genannten empfangenen Pakets und des genannten vorhergehenden Pakets einander gleich sind.

8. Verfahren nach Anspruch 1, wobei der Schritt der Ermittlung, ob das genannte empfangene Paket ein neu übertragenes Paket ist, weiterhin die nachfolgenden Verfahrensschritte umfasst:
- das Extrahieren eines physikalischen Schichtkonvergenzprotokolls (PLCP) und eines MAC Headers aus dem genannten empfangenen Paket, das in dem genannten ersten Speichermedium gespeichert ist; und
- das Vergleichen des PLCP und des MAC Headers des genannten Datenpakets, das in dem genannten ersten Speichermedium gespeichert ist mit einem vorher empfangenen Paket mit einem Fehler, gespeichert in einem zweiten Speichermedium.

9. Gerät (2, 4) zum Kombinieren eines Datenpakets in einem Kommunikationssystem, das die nachfolgenden Elemente umfasst:
- ein Demodulationsmittel (14) zum Demodulieren einer Übertragung der genannten Daten zum Erhalten eines empfangenen Pakets,
- ein erstes Speichermittel zur Speicherung des genannten empfangenen Pakets,
- ein zweites Speichermittel zur Speicherung eines vorhergehenden Pakets mit einem Fehler; und
- einen Prozessor (18) um zu ermitteln, ob das genannte empfangene Paket ein neu übertragenes Paket ist in Reaktion auf das genannte vorhergehende Paket entsprechend vorbestimmten Kriterien; und
- ein Kombinationsmittel (30) zum Kombinieren des genannten empfangenen Pakets mit dem genannten vorhergehenden Paket, wenn die genannten vorbestimmten Kriterien erfüllt sind,
**dadurch gekennzeichnet, dass** ein Maximalverhältnis-Kombinierverfahren (578) entsprechend dem Symbol Signal-Rausch-Verhältnis des genannten empfangenen Pakets und des genannten gespeicherten Pakets angewandt wird.

## Revendications

1. Procédé permettant de combiner un paquet de données dans un système de communication, le procédé comprenant les étapes suivantes :
la réception (550) d'une transmission dudit paquet de données pour obtenir un paquet reçu ;
la démodulation (552) dudit paquet reçu destiné à être stocké sur un premier support de mémorisation ;
la détermination du fait que ledit paquet reçu est un paquet retransmis ou non selon des critères prédéterminés (570, 572, 574, 576) ;
**caractérisé en ce que** si ledit paquet reçu est un paquet retransmis selon critères prédéterminés, le procédé comprend l'étape de combinaison dudit paquet reçu avec un paquet précédent stocké sur un deuxième support de mémorisation en utilisant un procédé de combinaison des taux maxima (578) et est exécuté en fonction du rapport signal/bruit symbolique dudit paquet reçu et dudit paquet stocké.

2. Procédé suivant la revendication 1, dans lequel l'étape de détermination du fait que ledit paquet reçu est un paquet retransmis ou non comprend en outre les étapes suivantes :
la détermination du fait que le champ de longueur (570) dudit paquet reçu et celui dudit paquet stocké sont identiques ou non ;
la détermination du fait que le champ de bit de relance (572) dudit paquet reçu est activé lorsque le champ de longueur dudit paquet reçu et celui dudit paquet stocké sont identiques ou non, et
la détermination du fait que le champ de commande séquentielle (576) dudit paquet reçu et celui dudit paquet stocké sont identiques lorsque le champ de bit de relance dudit paquet reçu est activé ou non.

3. Procédé suivant la revendication 1, dans lequel l'étape de détermination du fait que ledit paquet reçu est un paquet retransmis ou non comprend en outre l'étape de détermination du fait que le champ d'adresse (574) dudit paquet reçu et celui dudit paquet stocké sont identiques ou non.

4. Procédé suivant la revendication 1, dans lequel lesdits critères prédéterminés sont basés sur une trame MAC (Medium Access Control) dudit paquet reçu et dudit paquet stocké.

5. Procédé suivant la revendication 1, dans lequel l'étape de combinaison dudit paquet reçu avec ledit paquet stocké est exécutée dans un point d'accès (AP) (2).

6. Procédé suivant la revendication 6, dans lequel l'étape de combinaison dudit paquet reçu avec ledit paquet stocké est exécutée dans une station mobile (4) en communication avec ledit AP (2).

7. Procédé suivant la revendication 1, dans lequel l'étape de détermination du fait que ledit paquet reçu est un paquet retransmis ou non comprend en outre les étapes suivantes:
la détermination du fait que le champ de longueur (570) dudit paquet reçu et celui dudit paquet précédent sont identiques ou non ;
la détermination du fait que le champ de bit de relance (572) dudit paquet reçu est activé lorsque le champ de longueur dudit paquet reçu et celui dudit paquet précédent sont identiques ou non ;
la détermination du fait que le champ d'adresse (574) dudit paquet reçu et celui dudit paquet précédent sont identiques lorsque le champ de bit de relance dudit paquet reçu est activé ou non, et
la détermination du fait que le champ de commande séquentielle (576) dudit paquet reçu et celui dudit paquet précédent sont identiques lorsque le champ d'adresse dudit paquet reçu et celui dudit paquet précédent sont identiques ou non.

8. Procédé suivant la revendication 1, dans lequel l'étape de détermination du fait que ledit paquet reçu est un paquet retransmis ou non comprend en outre les étapes suivantes :
l'extraction d'un en-tête PLCP (Physical Layer Convergence Protocol) et d'un en-tête MAC dudit paquet reçu stocké sur ledit premier support de mémorisation, et
la comparaison de l'en-tête PLCP et de l'en-tête MAC dudit paquet de données stocké sur ledit premier support de mémorisation avec ceux d'un paquet reçu précédemment avec une erreur stocké sur un deuxième support de mémorisation.

9. Appareil (2, 4) pour combiner un paquet de données dans un système de communication, comprenant :
un moyen de démodulation (14) pour démoduler une transmission desdites données pour obtenir un paquet reçu ;
un premier moyen de mémorisation pour stocker ledit paquet reçu ;
un deuxième moyen de mémorisation pour stocker un paquet précédent avec une erreur, et
un processeur (18) pour déterminer si ledit paquet reçu est un paquet retransmis ou non en réponse audit paquet précédent selon des critères prédéterminés, et
un moyen de combinaison (30) pour combiner ledit paquet reçu audit paquet précédent lorsque lesdits critères prédéterminés sont remplis ;
**caractérisé en ce qu'**un procédé de combinaison des taux maxima (578) suivant le rapport signal/bruit symbolique dudit paquet reçu et dudit paquet stocké est utilisé.
